# EUROPÄISCHE PATENTSCHRIFT

(11) **EP 2 588 891 B1**
(45) Veröffentlichungstag und Bekanntmachung des Hinweises auf die Patenterteilung: **11.03.2015**
(21) Anmeldenummer: 11723004.5
(22) Anmeldetag: 24.05.2011
(51) Int. Cl.: G01V 5/00, G21F 1/10, G21F 3/00, G01N 23/04

(54) **STRAHLENSCHUTZVORHANG**
RADIATION PROTECTION CURTAIN
RIDEAU DE PROTECTION DE RADIATION

(30) Priorität: 01.07.2010 DE 102010025831
(43) Veröffentlichungstag der Anmeldung: 08.05.2013
(73) Patentinhaber: Smiths Heimann GmbH, 65205 Wiesbaden (DE)
(72) Erfinder: CRASS, Matthias, 64347 Griesheim (DE)
(74) Vertreter: Greif, Thomas
(86) Internationale Anmeldenummer: PCT/EP2011/002584
(87) Internationale Veröffentlichungsnummer: WO 2012/000590

(56) Entgegenhaltungen:
- EP-A1- 0 011 338
- EP-A1- 0 393 214
- EP-A1- 1 271 556
- EP-A1- 2 194 373
- DE-A1- 4 301 908
- GB-A- 1 603 654
- US-A- 3 967 129
- US-A- 4 020 346
- US-A- 5 870 449
- US-A1- 2004 016 271

## Beschreibung

Die Erfindung betrifft einen Strahlenschutzvorhang und eine Röntgenprüfvorrichtung, die mit dem Strahlenschutzvorhang ausgestattet ist.

Zur Überprüfung von Objekten wie Gepäckstücken auf verdächtige Gegenstände werden bekannterweise Röntgenprüfanlagen eingesetzt, die einen Strahlentunnel mit zumindest einer darin angeordneten Strahlenquelle aufweisen. Zur Durchleuchtung der Objekte werden diese von einer Fördereinrichtung durch den Strahlentunnel transportiert, der so nach außen abgeschirmt sein muss, dass keine unzulässige Strahlung austritt.

Zur Abschirmung des Strahlentunnels ist es aus der EP 1 271 556 A1 bekannt, den Ein- und Ausgang des Tunnels mittels Strahlenschutzvorhängen aus Blei zu verschließen. Bleivorhänge haben den Nachteil, dass sie von dem an- oder abtransportierten Prüfobjekt zur Seite geschoben werden können und so nicht mehr die gesamte Öffnung abdecken. Weiterhin können das hohe Gewicht der Bleivorhänge und die große Reibung dazu führen, dass insbesondere leichte Objekte umgeworfen werden oder sogar an dem Vorhang hängen bleiben. Die EP 0 393 214 A1 beschreibt einen Strahlenschutzvorhang in Form einer nach unten hängenden Scharnierbandkette aus einzelnen Bleiglasplatten.

Der Erfindung liegt die daher Aufgabe zugrunde, einen Strahlenschutzvorhang zu schaffen, der einen Strahlentunnel sicher nach außen abschirmt und zugleich die vorstehend beschriebenen Nachteile nicht aufweist.

Diese Aufgabe wird nach der Erfindung dadurch gelöst, dass der Strahlenschutzvorhang aus Platten aufgebaut ist, die nach Art einer nach unten hängenden Scharnierbandkette miteinander verbunden und aus einem Röntgenstrahlen absorbierenden Kunststoffverbundstoff hergestellt sind.

Der Aufbau des Vorhangs hat den weiteren Vorteil, dass er aus einzelnen, nebeneinander herunterhängenden Scharnierbandketten geringer Breite aufgebaut werden kann. Ein durch den Vorhang transportiertes Gepäckstück drückt somit nur den Bereich des Vorhangs zurück, der der Gepäckstückbreite entspricht. Gleichfalls können die einzelnen Platten, von denen die Kettenglieder gebildet werden, in ihrer Höhe so gestaltet werden, dass eine Kette zumindest aus fünf, bevorzugt aus mehr als zehn, Gliedern gebildet wird. So passt sich die Öffnung des Vorhangs beim Durchlauf eines Gepäcksstücks auch in der Höhe dem Gepäckstück an. Öffnungen im Vorhang, durch die Strahlung nach außen treten kann, werden minimiert.

Die Herstellung der Platten aus einem Röntgenstrahlen absorbierenden Kunststoffverbundstoff ermöglicht es, die Reibung gegenüber Bleivorhängen zu verringern, da die Platten mit einer glatten Oberfläche versehen werden können. Darüber hinaus können spritzgussfähige Kunststoffverbundmaterialen verwendet werden. So lassen sich auch komplizierte Formen, beispielsweise Platten mit komplexen Scharnierteilen, herstellen. Derartige Kunststoffverbundmaterialien mit Röntgenstrahlen absorbierenden Eigenschaften sind auf dem Markt erhältlich.

Eine Röntgenprüfvorrichtung zur Prüfung von Objekten, insbesondere von Gepäckstücken, mit Röntgenstrahlen enthält neben einen Strahlentunnel, in dem zumindest eine Strahlenquelle angeordnet ist, eine Fördereinrichtung für die Objekte, die durch den Strahlentunnel führt. Zumindest der Eingang, bevorzugt auch der Ausgang des Strahlentunnels ist mit einem Strahlenschutzvorhang gemäß der Erfindung nach außen abgeschirmt. Der Strahlenschutzvorhang verschließt daher den Öffnungsbereich des Tunnels oberhalb der Fördereinrichtung und wird beim Einlauf oder Auslauf eines Gepäckstücks teilweise von diesem angehoben.

Nachfolgend wird die Erfindung anhand eines vereinfacht dargestellten Ausführungsbeispiels näher erläutert. Es zeigen:
- Figur 1 und Figur 2: schematisch eine Röntgenprüfvorrichtung in Seiten und Frontansicht,
- Figur 3: in Schrägansicht eine Platte des Strahlenschutzvorhangs, die als Glied einer Scharnierbandkette gestaltet ist,
- Figur 4: zeigt in Schrägansicht drei nebeneinander überlappend angeordnete Platten von drei senkrechten Ketten,
- Figur 5: zeigt die mittlere Platte von Figur 4 in hochgeklappter Position,
- Figur 6: zeigt den Ausschnitt eines aus mehreren Scharnierbandketten gebildeten Vorhangs, wobei jede Kette mehrere Platten als Glieder aufweist.

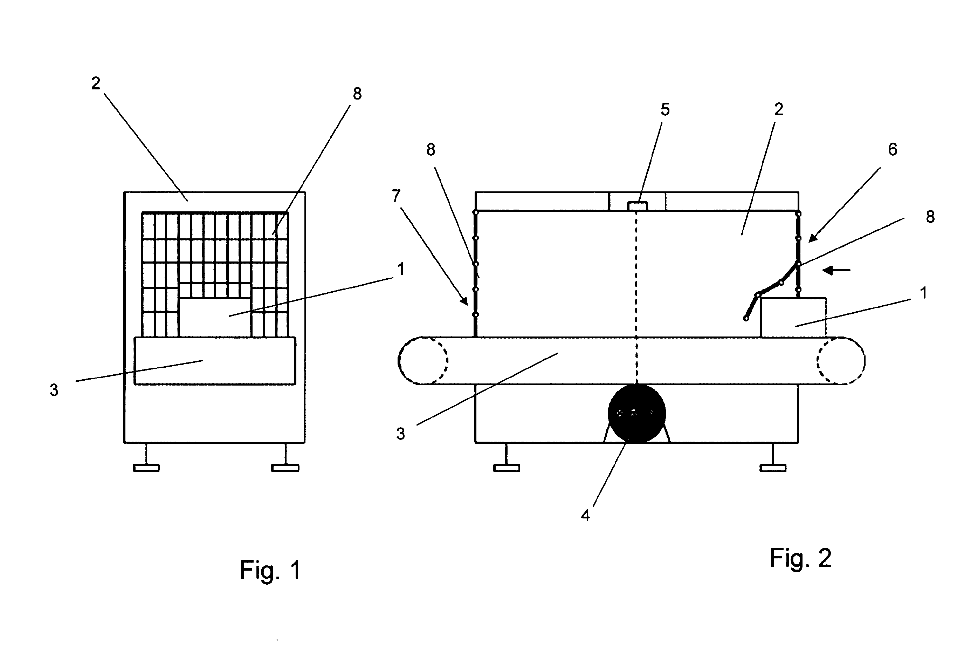

In den Figuren 1 und 2 ist eine Röntgenprüfvorrichtung schematisch dargestellt, die zum Prüfen von Objekten 1 auf verdächtige Gegenstände dient. Bevorzugtes Anwendungsgebiet ist die Prüfung Gepäck, das von Passagieren mitgeführt wird.

Die Prüfvorrichtung enthält einen Strahlentunnel 2, durch den ein Bandförderer 3 als Fördereinrichtung führt. Auf dem Bandförderer 3 werden die Objekte 1 durch den Strahlentunnel 2 gefördert. Im Strahlentunnel ist eine Röntgenquelle 4 zum Durchleuchten der Objekte 1 angeordnet. Auf die Strahlenquelle 4 ist eine Detektoranordnung 5 ausgerichtet, von der die nicht vom Objekt 1 absorbierten Strahlen für eine Auswertung detektiert werden.

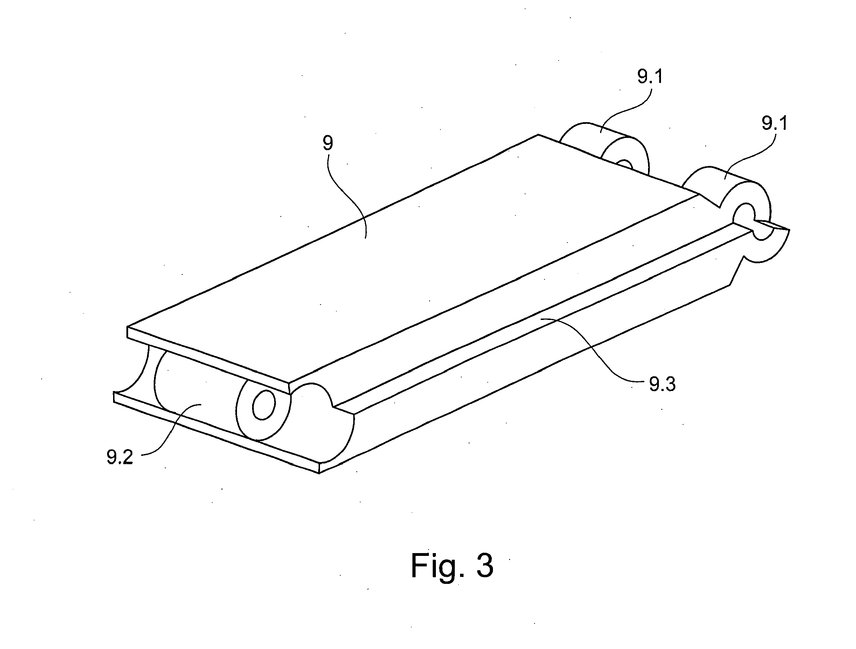

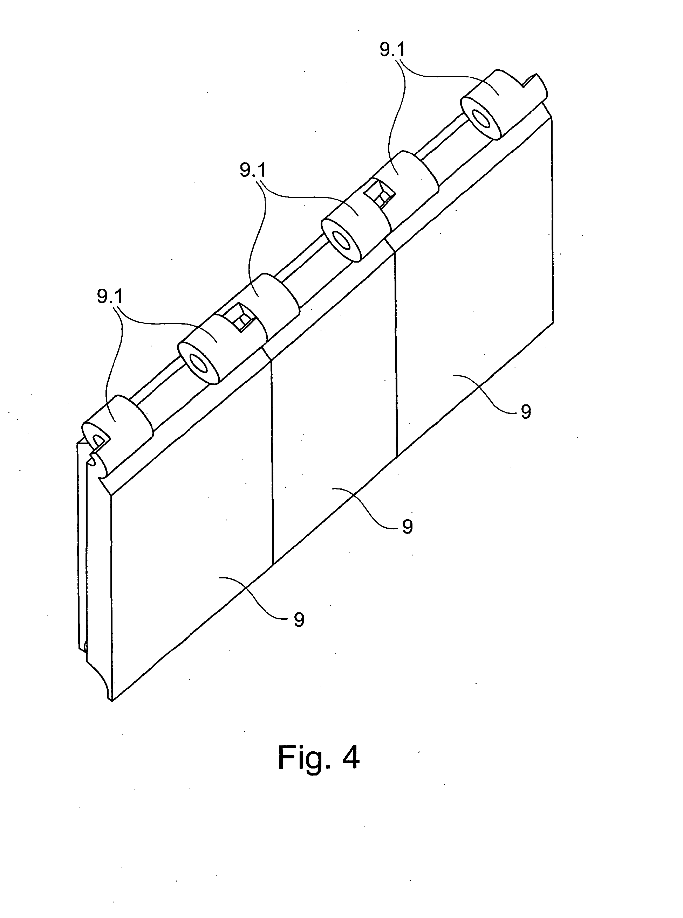

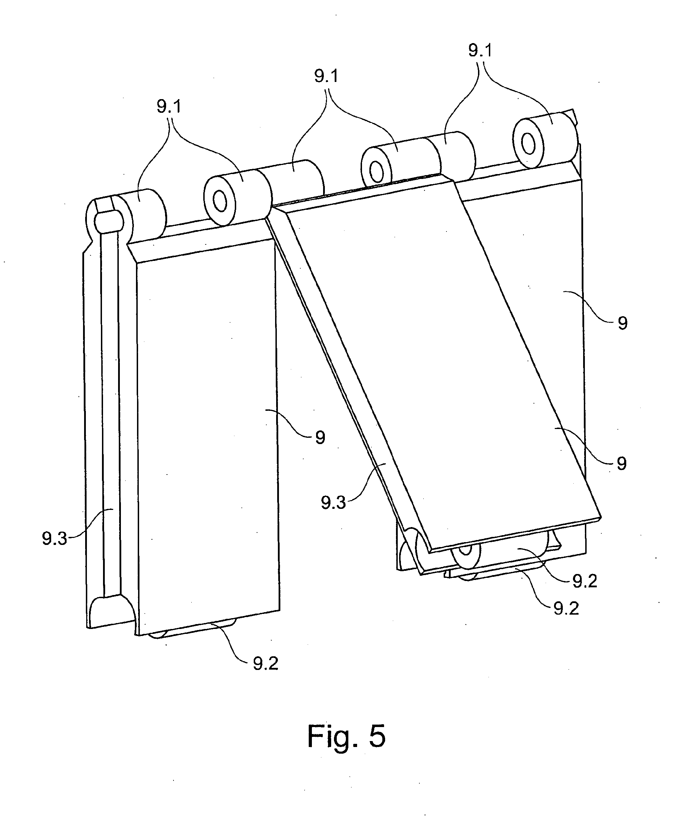

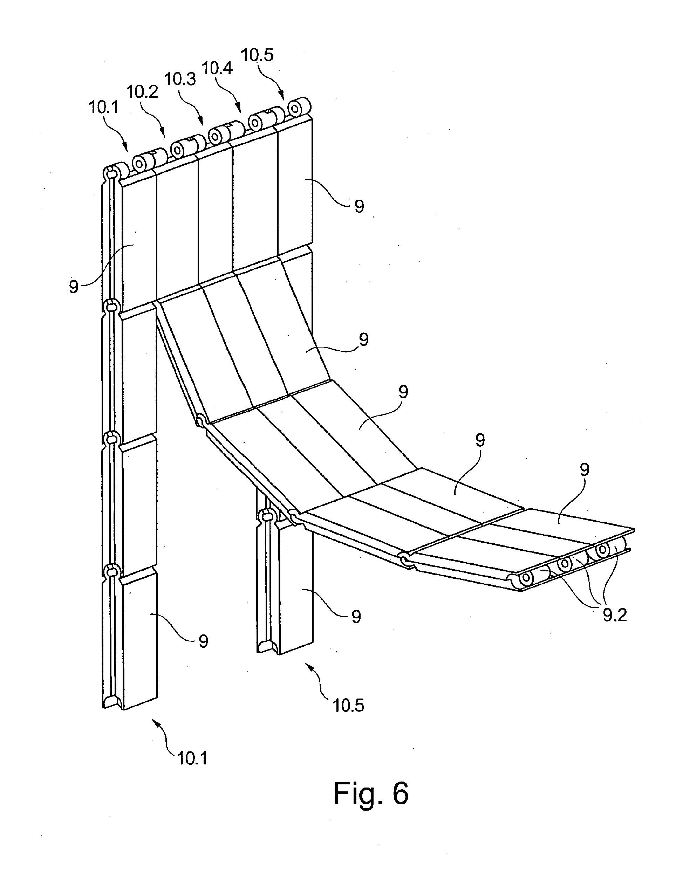

Zumindest am Eingang 6 des Strahlentunnels 2, bevorzugt auch am Ausgang 7, ist jeweils zumindest ein Strahlenschutzvorhang 8 nach unten hängend angeordnet. Falls zweckmäßig, können auch mehrere Strahlenvorhänge hintereinander am Eingang oder Ausgang des Strahlentunnels 2 angeordnet werden. Die Strahlenschutzvorhänge 8 schirmen den Strahlentunnel 2 nach außen ab, so dass keine unzulässige Röntgenstrahlung austritt. Der Aufbau eines Strahlenschutzvorhangs 8 ist in den Figuren 3 bis 6 detaillierter dargestellt:
Der Strahlenschutzvorhang 8 ist aus Platten 9 aufgebaut, die nach Art einer nach unten hängenden Scharnierbandkette 10.1 - 10.5 miteinander verbunden und aus einem Röntgenstrahlen absorbierenden Kunststoffverbundstoff hergestellt sind, wie in Fig. 6 dargestellt ist.

Jede Platte 9 weist an ihrem oberen und unteren Ende jeweils Scharnierelemente 9.1, 9.2 auf, die es ermöglichen, zwei Platten 9 gelenkig miteinander zu verbinden. Bevorzugt sind die Scharnierelemente jeweils 9.1, 9.2 als Öse gestaltet, und zwei Platten 9 werden durch Einschieben eines Verbindungsstiftes in die Ösen miteinander verbunden. An einer Seite sind zwei ösenförmige Elemente 9.1 mit Abstand voneinander angeordnet. An der entgegengesetzten Seite befindet sich eine zentrale Öse 9.2. Die zentrale Öse 9.2 kann zwischen die beiden Ösen 9.1 einer anderen Platte 9 bewegt werden, um eine Verbindung herzustellen. Eine Längsseite jeder Platte 9 ist als etwas überstehende Kante 9.3 gestaltet. Die Kante 9.3 ermöglicht es, zwei Platten 9 nebeneinander und mit sich überdeckenden Kanten 9.3 anzuordnen, so dass kein Spalt zwischen zwei Platten 9 von zwei benachbarten Ketten 10.1-10.5 entsteht, durch den Strahlung austreten könnte.

Die überstehende Kante 9.3 ist in Richtung zum Scharnierteil 9.1 verlängert und dient so als Anschlag, der die Schwenkbewegung zweier Platten 9 relativ zueinander begrenzt.

Jede Platte 9 hat bevorzugt glatte Außenflächen, damit die Reibung zu einem Objekt 1 verringert wird.

Die Breite einer Platte 9 und damit die Breite einer Kette 10.1 - 10.5 beträgt bevorzugt 10 mm - 90 mm, vorzugsweise 15 mm - 40 mm, im Beispiel beträgt sie etwa 20 mm. Die in senkrechter Richtung des Vorhangs 8 und in Längsrichtung einer Kette 10.1 - 10.5 gemessene Höhe einer Platte 9 beträgt bevorzugt zwischen 20 mm und 60 mm, bevorzugt 30 mm - 50 mm, im Beispiel etwa 40 mm. Beträgt die Breite der Öffnung eines Strahlentunnels 100 cm und die Höhe der Öffnung 80 cm, so besteht der Strahlenschutzvorhang 8 aus mindestens 12 nebeneinander nach unten hängenden Scharnierbandketten 10.1-10.5, wobei jede Scharnierbandkette 10.1-10.5 aus zumindest 14 Platten 9 als Kettenglieder aufgebaut ist.

Der Strahlenvorhang 8 schließt die Öffnung des Strahlentunnels oberhalb des Bandförderers 3 vollständig ab. Dazu ist jede seiner Ketten 10.1 - 10.5 oberhalb der Öffnung am Gehäuse des Strahlentunnels 8 gelenkig aufgehängt und reicht bis an den Bandförderer 3. Der Vorhang 8 ist dabei so aufgehängt, dass seine Ketten 10.1-10.5 jeweils in Transportrichtung des Bandförderers 3 schwenken können. An der Einlaufseite schwenken sie daher nach innen in den Strahlentunnel 2, an der Auslaufseite nach außen. Ein einlaufendes Objekt 1, beispielsweise ein Gepäckstück, drückt dabei die mit ihm in Kontakt tretenden Platten 9 nach vorne, wodurch sich diese auf seine Oberseite auflegen und so auch dort die Strahlung abschirmen. In Querrichtung wird der Vorhang nur im Bereich der Platten 9 geöffnet, die sich im Förderweg des Objekts 1 befinden und von diesem nach vorne bewegt werden.

## Patentansprüche

1. Strahlenschutzvorhang der aus Platten (9) aufgebaut ist, die nach Art einer nach unten hängenden Scharnierbandkette (10.1 - 10.5) miteinander verbunden sind und **dadurch gekennzeichnet, dass** er aus einem Röntgenstrahlen absorbierenden Kunststoffverbundstoff hergestellt sind.

2. Strahlenschutzvorhang nach Patentanspruch 1 **dadurch gekennzeichnet, dass** die Breite einer Platte (9) 10 mm - 90 mm, vorzugsweise 15 mm - 40 mm, insbesondere etwa 20 mm, beträgt.

3. Strahlenschutzvorhang nach Patentanspruch 1 oder 2, **dadurch gekennzeichnet, dass** die Höhe einer Platte (9) zwischen 20 mm und 60 mm, bevorzugt 30 mm - 50 mm, insbesondere etwa 40 mm beträgt.

4. Strahlenschutzvorhang nach einem der Ansprüche 1 bis 3 **dadurch gekennzeichnet, dass** die Platten (9) glatte Außenflächen aufweisen.

5. Strahlenschutzvorhang nach einem der Ansprüche 1 bis 4 **dadurch gekennzeichnet, dass** die Längsseite einer Platte (9) als überstehende Kante (9.3) gestaltet ist, die es ermöglicht, zwei Platten (9) nebeneinander und mit sich überdeckenden Kanten (9.3) anzuordnen.

6. Strahlenschutzvorhang nach einem der Ansprüche 1 bis 5, **dadurch gekennzeichnet, dass** eine Platte (9) an ihrem oberen und unteren Ende jeweils als Öse gestaltete Scharnierelemente (9.1., 9.2) aufweist.

7. Röntgenprüfvorrichtung zur Prüfung von Objekten (1), insbesondere von Gepäckstücken, mit einem Strahlentunnel (2), durch den eine Fördereinrichtung (3) für die Objekte (1) führt und in dem eine Röntgenquelle (4) angeordnet ist, wobei zumindest der Eingang, bevorzugt der Eingang und der Ausgang, des Strahlentunnels (2) mit einem Strahlenschutzvorhang (8) nach außen abgeschirmt ist, **dadurch gekennzeichnet, dass** der Strahlenschutzvorhang (8) gemäß einem oder mehreren der Patentansprüche 1 bis 6 gestaltet ist.

## Claims

1. Radiation protection curtain made up of plates (9) that are connected to one another in the manner of a downwardly hanging flat-top chain (10.1 - 10.5) and **characterized in that** it is produced from an x-ray-absorbing polymer composite.

2. Radiation protection curtain according to Patent Claim 1, **characterized in that** the width of a plate (9) is 10 mm - 90 mm, preferably 15 mm - 40 mm, in particular about 20 mm.

3. Radiation protection curtain according to Patent Claim 1 or 2, **characterized in that** the height of a plate (9) is between 20 mm and 60 mm, preferably 30 mm - 50 mm, in particular about 40 mm.

4. Radiation protection curtain according to one of Claims 1 to 3, **characterized in that** the plates (9) have smooth outer surfaces.

5. Radiation protection curtain according to one of Claims 1 to 4, **characterized in that** the longitudinal side of a plate (9) is designed as a protruding edge (9.3), which allows the arrangement of two plates (9) next to one another and with overlapping edges (9.3).

6. Radiation protection curtain according to one of Claims 1 to 5, **characterized in that** a plate (9) has at its upper and lower ends hinge elements (9.1, 9.2) that are respectively designed as loops.

7. X-ray inspection device for inspecting objects (1), particularly items of luggage, comprising a radiation tunnel (2) through which a conveying device (3) for the objects (1) passes and in which an x-ray source (4) is arranged, at least the entrance, preferably the entrance and the exit, of the radiation tunnel (2) being shielded outwardly by a radiation protection curtain (8), **characterized in that** the radiation protection curtain (8) is designed according to one or more of Patent Claims 1 to 6.

## Revendications

1. Rideau de protection contre les radiations qui est constitué de plaques (9) qui sont reliées les unes aux autres à la manière d'une chaîne plate à charnières pendant vers le bas (10.1 - 10.5) et **caractérisé en ce qu'**il est fabriqué à partir d'un matériau composite plastique absorbant les rayons X.

2. Rideau de protection contre les radiations selon la revendication 1, **caractérisé en ce que** la largeur d'une plaque (9) vaut de 10 mm à 90 mm, de préférence de 15 mm à 40 mm, en particulier approximativement 20 mm.

3. Rideau de protection contre les radiations selon la revendication 1 ou 2, **caractérisé en ce que** la hauteur d'une plaque (9) vaut de 20 mm à 60 mm, de préférence de 30 mm à 50 mm, en particulier approximativement 40 mm.

4. Rideau de protection contre les radiations selon l'une quelconque des revendications 1 à 3, **caractérisé en ce que** les plaques (9) présentent des surfaces extérieures lisses.

5. Rideau de protection contre les radiations selon l'une quelconque des revendications 1 à 4, **caractérisé en ce que** le côté longitudinal d'une plaque (9) est configuré en tant que bord saillant (9.3) qui permet d'agencer deux plaques (9) de manière juxtaposée et avec des bords (9.3) se recouvrant.

6. Rideau de protection contre les radiations selon l'une quelconque des revendications 1 à 5, **caractérisé en ce qu'**une plaque (9) comprend à son extrémité supérieure et à son extrémité inférieure à chaque fois des éléments de charnière (9.1, 9.2) configurés sous forme d'oeillets.

7. Dispositif de contrôle par rayons X pour le contrôle d'objets (1), en particulier de bagages, comprenant un tunnel de rayonnement (2), traversé par un dispositif de transport (3) pour les objets (1) et dans lequel est disposée une source de rayons X (4), au moins l'entrée, de préférence l'entrée et la sortie, du tunnel de rayonnement (2) étant protégée(s) vers l'extérieur à l'aide d'un rideau de protection contre les radiations (8), **caractérisé en ce que** le rideau de protection contre les radiations (8) est configuré selon l'une quelconque ou plusieurs des revendications 1 à 6.
